Europäisches Patentamt

European Patent Office

Office européen des brevets

(11) Veröffentlichungsnummer: **0 320 586 B1**

# EUROPÄISCHE PATENTSCHRIFT

(45) Veröffentlichungstag der Patentschrift: **08.07.92**

(21) Anmeldenummer: **88116349.7**

(22) Anmeldetag: **03.10.88**

(51) Int. Cl.⁵: **B01F 7/04**

Die Akte enthält technische Angaben, die nach dem Eingang der Anmeldung eingereicht wurden und die nicht in dieser Patentschrift enthalten sind.

(54) Vorrichtung zur Behandlung von hochviskosen Substanzen.

(30) Priorität: **18.12.87 DE 3743051**

(43) Veröffentlichungstag der Anmeldung:
**21.06.89 Patentblatt 89/25**

(45) Bekanntmachung des Hinweises auf die
Patenterteilung:
**08.07.92 Patentblatt 92/28**

(84) Benannte Vertragsstaaten:
**CH DE ES FR GB IT LI NL**

(56) Entgegenhaltungen:
**EP-A- 0 105 436      EP-A- 0 220 575**
**CH-A- 661 450        DE-A- 2 802 876**
**GB-A- 350 689        GB-A- 793 457**
**US-A- 2 283 008**

(73) Patentinhaber: **Zimmer Aktiengesellschaft**
**Borsigallee 1**
**W-6000 Frankturt am Main 60(DE)**

(72) Erfinder: **Wilhelm, Fritz**
**Rendeler Strasse 79a**
**W-6367 Karben(DE)**
Erfinder: **Witt, Heinz-Günter**
**Kaiserstrasse 80**
**W-6050 Offenbach/Main(DE)**
Erfinder: **Hölting, Ludwig**
**Taunusstrasse 1**
**W-6454 Bruchköbel(DE)**

## Beschreibung

Die vorliegende Erfindung betrifft eine Vorrichtung zur Behandlung von hochviskosen Substanzen, bestehend aus einem beheizbaren, liegenden Behälter mit Stau- und Abstreifelementen sowie einer rotierenden Hohlwelle als Träger mehrerer hintereinander aufgereihter, temperierbarer Rührelemente. Insbesondere betrifft die Erfindung eine Vorrichtung zur Herstellung von Polykondensaten durch Schmelzphasen-Polykondensation unter erhöhter Temperatur und unter Vakuum von vorgebildeten Kondensaten. Die Vorrichtung kann aber auch bei der chemischen Nachbehandlung von Polymer-Schmelzen, z. B. der Umsetzung von Endgruppen mit Modifizierungsmitteln, eingesetzt werden.

Zur Polykondensation von Polyalkylenterephthalaten finden allgemein Reaktoren mit ringscheibenförmigen Rührelementen, wie z. B. in der DE-B-17 45 541 beschrieben, Verwendung. Bei dem Einsatz dieser Reaktoren für die Herstellung besonders viskoser, meist vernetzend abbauender Polykondensate ergeben sich jedoch schnell Schwierigkeiten, da diese wegen ihrer hohen Zähigkeit von der oberen Behälterwandung, den Ringscheiben und der Welle nicht ausreichend schnell abfließen. Besonders kritisch ist hierbei der Wandbereich an der Grenze zwischen Schmelze und Dampfphase, an der sich bei leicht schwankendem Schmelzeniveau ein Polymerrückstand aufbaut. Ein Teil des Produktes verbleibt somit länger oder ganz im Reaktor, was zu einer Minderung der Produktqualität durch Verfärbung und/oder Vernetzung führt.

Die Vorrichtung gemäß DE-C-2619854 mit durchgehender Abwischeinrichtung bringt zwar eine bessere Reinigung der Behälterwandung, führt aber, insbesondere durch den Wegfall von Trennwänden, zu einem noch intensiveren Polymeraufbau an der Welle und den Ringscheiben.

Vorrichtungen wie die in der DE-C-2349106 beschriebene eignen sich zum Einmischen von Additiven, zum Beispiel von Masterbatch, in Polymerschmelzen. Für eine mit der Freisetzung flüchtiger Bestandteile verknüpfte Behandlung hochviskoser Substanzen sind solche Apparaturen jedoch wenig brauchbar. Für derartige Reaktionen, insbesondere Polykondensationen, ist ein hohes Verhältnis von ständig erneuerter, freier Produktoberfläche zu Produktvolumen wesentlich, wobei gleichzeitig zur Vermeidung unerwünschter Nebenreaktionen, wie Vernetzung und/oder Abbau, die eingeleitete Energie möglichst gering sein sollte. Im Gegensatz hierzu sind Form und Anordnung der Rührscheiben und der Gegenschaufeln gemäß der DE-Patentschrift auf maximale Knetwirkung hin konzipiert, das heißt auf maximale Zufuhr von Energie bei geringer Ausbreitung des Produktsumpfes. Maßnahmen zur Steigerung der freien Produktoberfläche auf dem Wege der Filmbildung werden nicht getroffen. Die als Schaber ausgebildeten, aufgesetzten, axialen Rührarme gestatten nur eine geringe Ausbreitung von Produkt an der Behälterwandung ohne gelegentliche, qualitätsbeeinträchtigende Krustenbildungen verhindern zu können.

Auch die in der EP-A-0 105 436 beschriebene Vorrichtung mit Scheibenelementen mit bis auf Ausschnitte im äußeren Bereich geschlossener Fläche und voreilend aufgesetzten Rühr- bzw. Knetbarren ist auf maximale Rührwirkung sowie auf möglichst große Wärmeaustauschfläche Scheibenelement zu Produkt ausgerichtet. Dies ist gleichbedeutend mit einer Reduzierung der gegenüber dem Dampfraum freien Produktoberfläche - und steht somit der ungehinderten Freisetzung flüchtiger Bestandteile entgegen.

Aufgabe der vorliegenden Erfindung ist daher, eine Vorrichtung zur Behandlung von hochviskosen Substanzen so zu gestalten, daß die vorgenannten Nachteile nicht auftreten oder zumindest minimalisiert werden.

Die Lösung der gestellten Aufgabe erfolgt bei der eingangs beschriebenen Vorrichtung erfindungsgemäß durch die kennzeichnenden Maßnahmen des Anspruchs 1. Bevorzugte Ausführungen ergeben sich aus den Unteransprüchen.

Die Vorrichtung eignet sich besonders für kontinuierliche Betriebsweise zur Behandlung von Polykondensat-Schmelzen mit einer Eingangsviskosität von etwa 1 bis 100 Pas und einer Ausgangsviskosität von etwa 100 bis 10 000 Pas. Bevorzugte Betriebsbedingungen sind Temperaturen von 250 bis 320 °C, ausnahmsweise bis 370 °C, sowie hohes Vakuum. Die Produktverweilzeit liegt je nach gewünschter Endviskosität bei 0,5 bis 5 h, vorzugsweise bei 0,75 bis 3 h. Die Drehzahl der Rührerwelle ist abhängig von Viskosität und Verweilzeit und muß von Fall zu Fall empirisch ermittelt werden. Als geeignet erwiesen sich Drehzahlen im Bereich von etwa 1,0 bis 30 Upm, vorzugsweise 3 bis 10 Upm. Bei zunehmender Drehzahl über 10 Upm steigt bei hoher Produktzähigkeit die Scherleistung derart an, daß es immer schwieriger wird, die resultierende Produktaufheizung durch Kühlung auszugleichen.

Prinzipiell ist auch ein diskontinuierlicher Betrieb möglich, wobei der Produktaustritt dann bevorzugt am Boden in der Behältermitte erfolgt. Auch kann der Behälter, statt der eines Zylinders, die Form eines Kegelstumpfes oder eines Zylinders mit beidseitig kegelstumpfförmigen Enden haben.

Nachfolgend wird die Erfindung anhand der Zeichnungen näher erörtert.

Dabei zeigen:

Fig. 1 einen Längsschnitt der erfindungsgemäßen Vorrichtung;

Fig. 2 die axiale Ansicht der Vorrichtung in Fig. 1;

Fig. 3 einen Längsschnitt einer besonders bevorzugten Ausführung der erfindungsgemäßen Vorrichtung;

Fig. 4 eine axiale Ansicht der Vorrichtung in Fig. 3 bei dreiflügeliger Ausführung des Rührelementes einschließlich der Schnitte A - B und C - D von Fig. 4;

Fig. 5 die axiale heckseitige Ansicht des letzten austrittseitigen Rührelementes;

Fig. 6 eine schematische Darstellung verschiedener, alternativ möglicher Profile der Produktschleppleisten

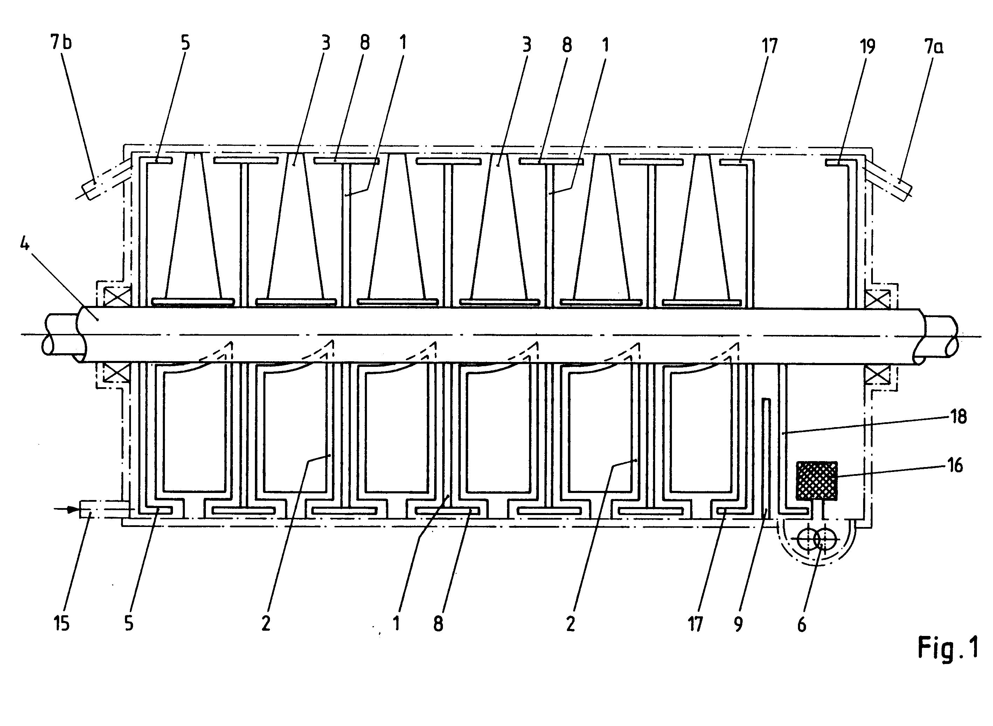

Fig. 1 zeigt einen Längsschnitt der erfindungsgemäßen Vorrichtung am Beispiel eines zylindrischen Apparatebehälters mit einer Hohlwelle 4 und beiderseitigen Lager- und Dichtungseinheiten in schematischer Darstellung. Hierbei kann ein Wellenende auch innerhalb des Produktraumes produktgeschmiert gelagert sein.

Der Apparateanfang ist gegeben mit der durch den Produkteinlaß 15 gekennzeichneten Stirnwand, das Apparateende durch einen Produktzwangsaustrag mittels einer selbstreinigenden Doppelschnecke 6, welche ihren Produktzufluß am Grunde der in Bewegungsrichtung der wandnah drehenden Rührelemente 18 und 19, vor einem Staugitter 16 lokalisierten Produktsumpfzone besitzt. Entsprechende, temperierbare Rührelemente 5 und 17 zur Vermeidung stagnierender, schädlicher Produkt-Randzonen sind auch am Behälteranfang sowie vor dem Wehr 9 installiert. Der Abzug der Brüden erfolgt über die Stutzen 7a und 7b.

Die eigentliche Behandlungsstrecke wird durch den zwischen Ein- und Auslaß gelegenen Apparatebereich mit einer Vielzahl von auf der Welle 4 in Reihe geschalteten, beheizten Rührelementen 1, sowie den Abstreifelementen 2 und den Stauelementen 3 zwischen den jeweiligen Rührelementen 1 definiert.

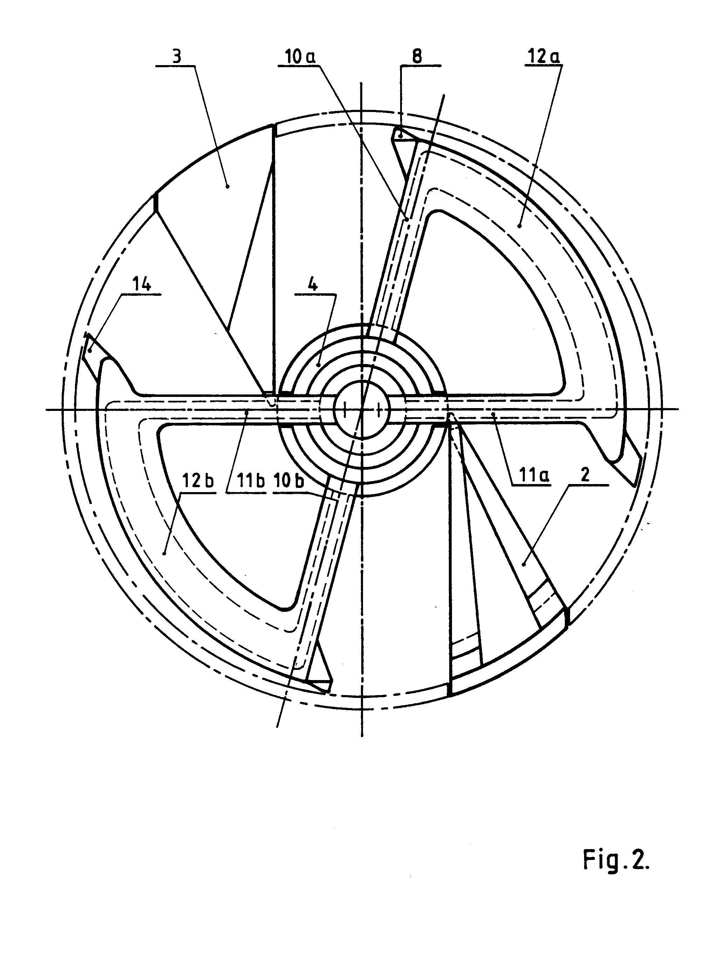

Fig. 2 zeigt hierzu die axiale Ansicht eines zweiflügeligen Rührelementes.

Die im Detail dargestellten Rührelemente können entlang der Welle in axialer Ansicht fluchtend oder um bis zu 50 %, vorzugsweise bis zu 5 % des von den Speichen eines Rührflügels gebildeten Winkels versetzt angebracht sein. Die Wellenachse ist, wie hier gezeigt, mit der Behälterachse identisch oder verläuft leicht exzentrisch zur Behälterachse in der dem Produktsumpf gegenüberliegenden Behälterhälfte.

Die in erhöhter Position montierten Stauelemente 3 sind in der Seitenansicht der Fig. 1 kegelstumpfähnlich, in Richtung des Reaktorkerns verdickt und an der Spitze in Wellennähe T-förmig verbreitert. Diese Querschnittserweiterung betrifft jedoch nur die axiale Stauelement-Ausdehnung und ist daher in der axialen Sicht der Fig. 2 nicht zu sehen. Desgleichen betrifft die in Fig. 2 gezeigte, wandnahe Basisverbreiterung nur die senkrecht zur Behälterachse verlaufende Richtung und ist daher in Fig. 1 nicht zu sehen. Gemäß Fig. 2 ist die Stauelementspitze aufgrund der erfindungsgemäßen Winkelanstellung gegenüber der radialen Bezugsrichtung früher im Eingriff als der Stauelementfuß an der Behälterwand. Hierdurch wird eine nach außen gerichtete Produktverdrängung vorgenommen, welche ein zu frühes, für die vollständige Produktbeaufschlagung und Selbstreinigung der Behälterwand unerwünschtes Abströmen des Produktes in das Behälterinnere verhindert. Das an den Staukörpern 3 aufgestaute Produkt wird von den Rührelementen 1 einer Scherung unterworfen und in Umfangsrichtung mit einer frischen Oberfläche ausgezogen.

(Diese erzwungene Oberflächenerneuerung ist für die beschleunigte Ausdampfung, z. B. von Spaltprodukten, sehr bedeutsam). Den Produkttransport und die regelmäßige Verteilung von Produkt über die Behälterwand übernehmen die an den Rührelementen befestigten Schleppleisten 8, ggf. in Verbindung mit einer Achsexzentrizität, welche in dem sumpfabgewandten Wandbereich eine zusätzliche Produkt-Freisetzung und einen intensiveren Produkt-Austausch an der Reaktorwand ermöglicht.

Das Abstreifelement 2 im unteren Behälterbereich ist als randgängiger Rahmen konzipiert, der vor dem erneuten Eintauchen der Rührelemente in den Produktsumpf die an der Welle, den Seitenflächen der Rührelemente und den Innenflächen der Schleppleisten 8 haftenden Produktschichten einer erneuten Scherung und Filmbildung und die Rührelemente einer regelmäßigen Säuberung unterwirft. Einzelne Abstreifelemente können zur Aufnahme von Meßkörpern, zum Beispiel von Temperaturfühlern, im wandnahen Bereich hohl ausgeführt sein.

Fig. 2 zeigt für die Abstreifelemente genauer, daß die Rahmenschenkel winkelversetzt ins Behälterinnere geführt werden. Die innere Querverbindung dieser Rahmenschenkel ist als Abstreifer der Welle wegen der Winkelanstellung gegenüber der radialen Richtung früher im Eingriff als der randständige Bereich, womit wiederum eine Produktverdrängung nach außen bezweckt wird.

Alternativ zu einem achsparallelen Rahmenbereich zeigt Fig. 2 für die Querverbindung der Rahmenschenkel der Abstreifelemente in Wellennähe zur Erzielung einer axialen Produktförderung eine schraubenförmig geneigte Anordnung.

Das Rührelement ist in dieser bevorzugten Ausführung mit zwei Rührflügeln (a) und (b) dargestellt. Die Rührflügel sind aufgebaut aus den hohlen Speichenpaaren 10a/11a und 10b/11b, die peri-

pher über die hohlen Ringsegmente 12a bzw. 12b verbunden und zur Beheizung an verschiedene Wärmeträgerkanäle der Hohlwelle 4 angeschlossen sind.

Die Ringsegmente zeigen in Drehrichtung nacheilend einen kurzen Ringfortsatz, an dem die Schleppleisten 8 befestigt sind. Dieser erfindungsgemäße Abschluß der Rührflügel mit nacheilenden Schleppleisten dient zugleich als Störstelle für den Filmauszug am Stauelement 3 und der Offenhaltung eines gewissen Apparatequerschnitts für die axiale Brüdenabströmung.

Im Bedarfsfall können über eine zweite Verlängerung der Ringsegmente dünnere, enger an der Wand entlang laufende Schabeelemente 14 an den Rührflügeln voreilend angebracht sein.

Fig. 2 ist als Beispiel des bevorzugten zweiflügeligen Rührelementes anzusehen. Selbstverständlich sind auch Rührelemente mit einem, drei oder vier beheizten Rührflügeln verwendbar. Besonderer Vorteil der ein- und zweiflügeligen Anordnung ist die leichte Demontierbarkeit als Gesamtanordnung. Drei- und vierflügelige Rührelemente weisen verfahrenstechnische Vorteile auf, wie gesteigerte strömungstechnische Stabilität und besserer Kammerungseffekt zur Vereinheitlichung der Produktverweilzeit. Allerdings ist eine einfache Demontage der Gesamtapparatur nicht ohne weiteres gewährleistet. Bei zweiflügeligen Rührelementen schließen die Speichen eines jeden Rührflügels einen Winkel von 50 bis 100 Grad, vorzugsweise von etwa 75 Grad ein, bei dreiflügeligen einen Winkel von 40 bis 80 Grad, vorzugsweise von 50 bis 60 Grad.

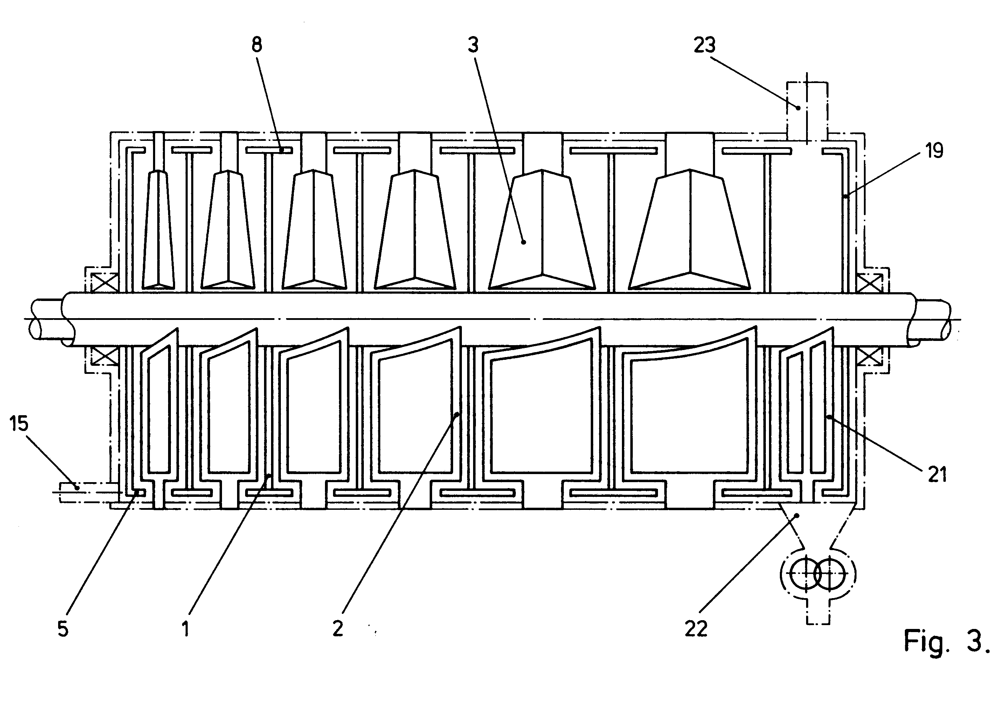

Eine besonders bevorzugte Ausführung der erfindungsgemäßen Vorrichtung ergibt sich aus Fig. 3 mit in axialer Richtung zunehmendem Abstand der Rühr-, Stau- und Abstreifelemente und oberem Brüdenabzug 23. Der Produktaustritt erfolgt über einen in Drehrichtung in den Winkelbereich von 20 bis 80 Grad hochgesetzten Produktaustrittsstutzen 22. Diesem ist ein kombiniertes, rahmenartiges Stau- und Abstreifelement 21 mit zusätzlichem Mittelsteg unmittelbar nachgestellt.

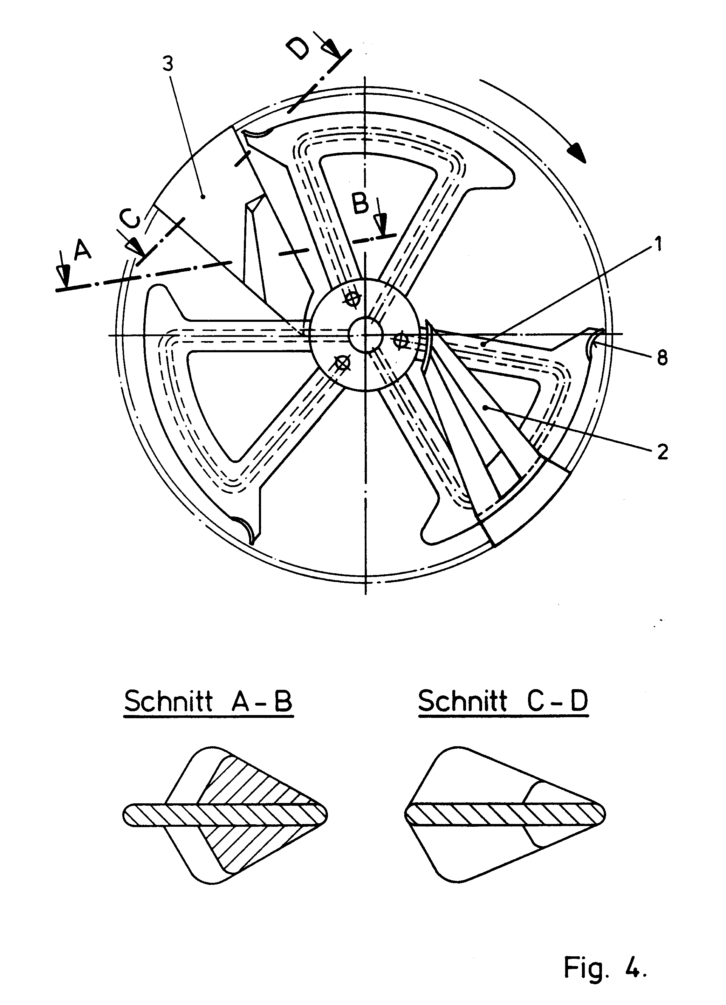

Die Stauelemente 3 ähneln in der Seitenansicht der Fig. 3 in ihrer äußeren Kontur einem Kegelstumpf mit wandseitiger Stützkonsole. Wie in Fig. 4, insbesondere in den Schnitten A-B und C-D dargestellt, besitzen die Stauelemente 3 ein rautenähnliches Querschnittsprofil mit stumpfer Anströmseite und gestreckter Heckseite. Die maximale radiale Höhe des Kegelstumpf-ähnlichen Teils ergibt sich hier aus dem Innenradius der Ringsegmentverbindungen der Rührflügel. Die in Fig. 4 gezeigten Abstreifelemente 2 weisen eine wandseitige, geschlossene Stützkonsole für die Rahmenschenkel und somit eine erhöhte mechanische Stabilität auf.

Bei dreiflügeliger Ausführung, wie die in Fig. 4 gezeigte, sind die Rührflügel von einem Rührelement zum nächsten um bis zu 25 %, vorzugsweise um bis zu 2,5 % des Speichenwinkels versetzt oder bei fluchtender Anordnung der Rührflügel die axial aufeinander folgenden Stau- und Abstreifelemente an der Behälterwandung um einen radialen Winkel von 0,5 bis 5 Grad, vorzugsweise von 1,0 bis 2,5 Grad versetzt.

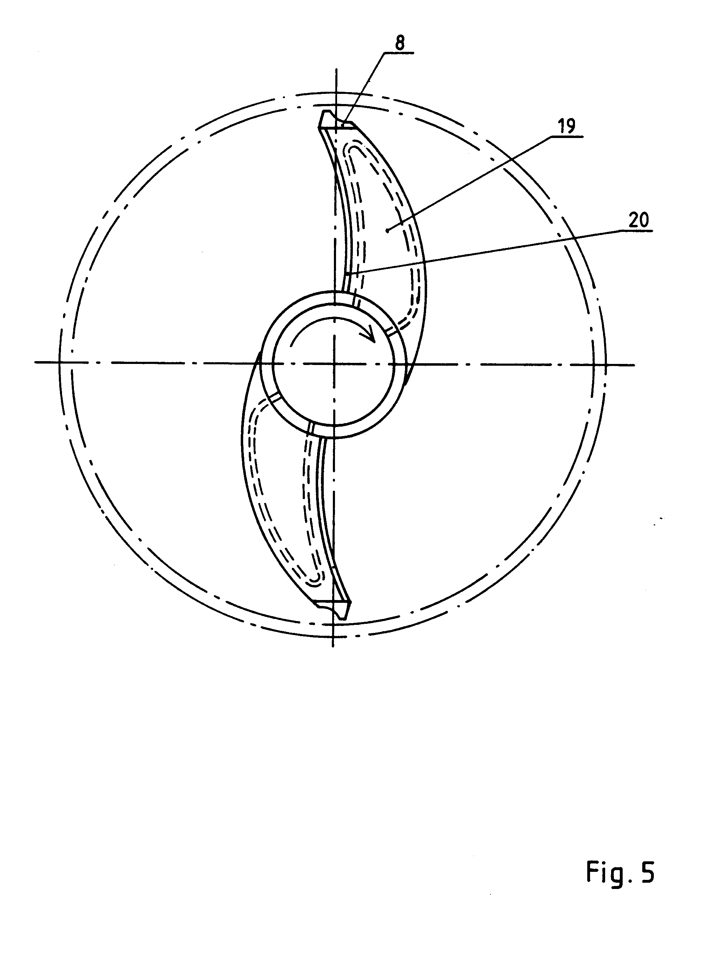

Die bevorzugte Ausführung des letzten, austrittseitigen Rührelementes 19 ist als heckseitige Ansicht bei zweiflügeliger Konzeption in Fig. 5 dargestellt. Die kompakten, beheizbaren Rührarme sind bezogen auf die Drehrichtung sichelartig nach hinten gekrümmt und weisen nacheilende Produktschleppleisten sowohl auf der Heckwandseite (20) als auch an der peripheren Behälterwand (8) auf. Durch diese kompakten, sichelförmigen Rührarme wird zum einen ein kontrolliertes Sumpfniveau im Produktaustrittsbereich erzielt, zum anderen aufgrund durchgängiger Produktschleppleisten 20, die im Außenbereich kontinuierlich in die Nachlaufkanten der einseitig aufgesetzten Produktschleppleisten 8 einmünden, eine geordnete Produktförderung vom Wellenbereich zur Peripherie erzeugt, und als Folge des regelmäßigen Produktaustausches ein stetiger Reinigungseffekt im Austrittsbereich gesichert.

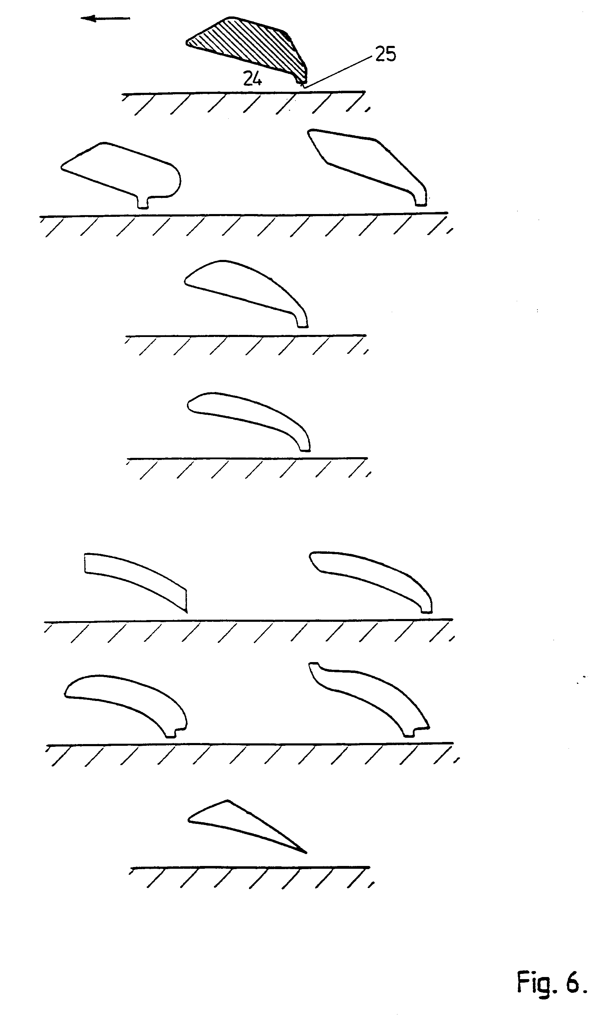

In Fig. 6 sind zehn verschiedene, alternativ mögliche Ausführungen der Produktschleppleisten (8) schematisch dargestellt. Diese Produktschleppleisten, die in ihrer Langsausdehnung parallel zur Behälterachse verlaufen (Fig. 1 und 3) und einen tragflügel-ähnlichen Querschnitt aufweisen (Fig. 6), schließen gegenüber der peripheren Behälterwand durch eine vergleichsweise dünne Nachlaufkante (25) bei minimalem Randspalt ab und bilden zusammen mit der peripheren Behälterwand an beiden Seiten offene, sich entgegen der Drehrichtung verjüngende, keilförmige oder konvexe Schöpfräume (24). Hierdurch ist gewährleistet, daß einerseits eine kontrollierte Produktmenge regelmäßig an die Wandung gefördert und ausgetauscht wird, und daß andererseits aufgrund minimaler Scherflächen die Zufuhr an Friktionswärme gering ist. Eine weitere Reduzierung der wandseitigen Reibungsenergie ergibt sich bei kammartiger oder wellenförmiger Gestaltung der Nachlaufkante.

**Patentansprüche**

1.  Vorrichtung zur Behandlung von hochviskosen Substanzen, bestehend aus einem beheizbaren, liegenden Behälter mit Produkteintritt (15) auf der einen und Produktaustritt (6, 22) auf der anderen Seite, einer temperierbaren, parallel zur Behälterachse verlaufenden, rotierenden Hohlwelle (4) als Träger mehrerer, in axialer Richtung hintereinander aufgereihter, temperierbarer Rührelemente (1), von denen das erste eintrittseitige Rührelement (5) und die letzten austrittseitigen Rührelemente (18, 19) eine von den übrigen abweichende Form aufweisen, und behälterseitig befestigter Stau- (3) und Abstreifelemente (2), dadurch gekennzeichnet, daß

a) jedes Rührelement (1) aus ein bis vier Rührflügeln mit je zwei hohlen Speichen (10, 11) und einem diese peripher verbindenden hohlen Ringsegment (12) mit nacheilend aufgesetzter Produkt-Schleppleiste (8) besteht und mittels eines über die Welle (4) zu- und abführbaren, durch die hohlen Speichen (10, 11) und die hohlen Ringsegmentverbindungen (12) zirkulierenden flüssigen Wärmeträgermediums temperierbar ist,

b) im unteren Behälterbereich in dem in Drehrichtung vor dem Produktsumpf liegenden Freiraum, zwischen jeweils zwei aufeinander folgenden Rührelementen (1), mit Ausnahme der beiden letzten austrittseitigen (18, 19), je ein rahmenartiges, randgängiges Abstreifelement (2) mit zwei gekröpften, in Umfangsrichtung gespreizten und gegenüber der radialen Bezugsrichtung entgegen der Drehrichtung geneigten Rahmenschenkeln sowie einer Querverbindung an der Welle (4) vorhanden ist, und

c) im oberen Behälterbereich in dem in Drehrichtung hochgezogenen Sumpfendbereich zwischen jeweils zwei nebeneinander austauchenden Rührelementen (1) mit Ausnahme der beiden letzten austrittseitigen (18, 19) je ein gegenüber der radialen Bezugsrichtung entgegen der Drehrichtung winkelversetztes, in der axialen Ansicht in Wandnähe verbreitertes und in der Seitenansicht in Wellennähe verdicktes Stauelement (3) mit stumpfer Anströmseite und gestreckter Heckseite bis an die Welle (4) herangeführt ist.

2. Vorrichtung gemäß Anspruch 1, dadurch gekennzeichnet, daß die Abstände der Rührelemente (1) voneinander sowie die gegenseitigen Abstände der Stau- (3) und Abstreifelemente (2) von der Produkteintrittseite zur Austrittseite zunehmen oder konstant sind.

3. Vorrichtung gemäß einem der Ansprüche 1 bis 2, dadurch gekennzeichnet, daß die radiale Breite der hohlen Ringsegmentverbindungen (12) von der Produkteintrittseite zur Austrittseite wahlweise abnimmt oder konstant ist.

4. Vorrichtung gemäß einem der Ansprüche 1 bis 3, dadurch gekennzeichnet, daß die Ringsegmentverbindungen (12) bezogen auf die Wellenachse konzentrisch oder spiralförmig mit einem Abstand zur Behälterwandung von weniger als 10 % des Behälterdurchmessers angeordnet sind.

5. Vorrichtung gemäß einem der Ansprüche 1 bis 4, dadurch gekennzeichnet, daß die axial aufeinander folgenden Stau- und Abstreifelemente (3 und 2) an der Behälterwandung auf Schraubenlinien und die aufeinander folgenden Rührflügel in axialer Richtung fluchtend angeordnet sind.

6. Vorrichtung gemäß einem der Ansprüche 1 bis 4, dadurch gekennzeichnet, daß die axial aufeinander folgenden Stau- und Abstreifelemente (3 und 2) entlang der Behälterwandung fluchtend und die aufeinander folgenden Rührflügel in axialer Richtung winkelversetzt angeordnet sind.

7. Vorrichtung gemäß einem der Ansprüche 1 bis 6, dadurch gekennzeichnet, daß ein jedes Rührelement (1) zwei Rührflügel aufweist, deren Speichen (10, 11) einen Winkel im Bereich von 50 bis 100 Grad einschließen, wobei die Rührflügel von einem Element zum nächsten um 0 bis 50 % dieses Winkels versetzt sind.

8. Vorrichtung gemäß Anspruch 7, dadurch gekennzeichnet, daß die Speichen (10, 11) einen Winkel von etwa 75 Grad einschließen, und die Rührflügel axial aufeinanderfolgender Rührelemente um 0 bis 5 % dieses Winkels versetzt sind.

9. Vorrichtung gemäß einem der Ansprüche 1 bis 6, dadurch gekennzeichnet, daß ein jedes Rührelement (1) drei Rührflügel aufweist, deren Speichen (10, 11) einen Winkel im Bereich von 40 bis 80 Grad einschließen, wobei die Rührflügel von einem Element zum nächsten um 0 bis 25 % dieses Winkels versetzt sind.

10. Vorrichtung gemäß Anspruch 9, dadurch gekennzeichnet, daß die Speichen (10, 11) einen Winkel im Bereich von 50 bis 60 Grad einschließen, und die Rührflügel um 0 bis 2,5 % dieses Winkels versetzt sind.

11. Vorrichtung gemäß Anspruch 9 oder 10, dadurch gekennzeichnet, daß die Rührflügel um 0 % versetzt sind, und die axial aufeinander folgenden Stau- und Abstreifelemente (3 und 2) an der Behälterwandung mit einem radialen Winkel im Bereich von 0,5 bis 5 Grad versetzt angeordnet sind.

12. Vorrichtung gemäß einem der Ansprüche 1 bis 11, dadurch gekennzeichnet, daß das letzte austrittseitige Rührelement (19) aus mindestens einem kompakten, beheizbaren, in Drehrichtung nach hinten gekrümmten, sichelartigen Rührarm mit je einer heckwandseitig nachgestellten (20) und einer peripher nacheilend aufgesetzten Produktschleppleiste (8) besteht.

13. Vorrichtung gemäß einem der Ansprüche 1 bis 12, dadurch gekennzeichnet, daß die peripheren, die zylindrische Wand bestreichenden Produktschleppleisten (8) mit tragflügel-ähnlichem Querschnitt und wandseitiger Nachlaufkante (25) mit glattem, kammartigem oder wellenförmigem Profil in Drehrichtung und an beiden Seiten offene, sich entgegen der Drehrichtung verjüngende Schöpfräume (24) bilden.

14. Vorrichtung gemäß einem der Ansprüche 1 bis 13, dadurch gekennzeichnet, daß der Produktaustritt in Drehrichtung nach der Behälterbodenlinie in den Winkelbereich von 20 bis 80 Grad hochgesetzt ist, und daß in Drehrichtung direkt hinter dieser Öffnung zwischen den beiden letzten austrittseitigen Rührelementen (18 und 19) wandseitig ein rahmenartiges Stator-Element mit zusätzlichem Mittelsteg (21) oder Gitterstruktur (16) angebracht ist.

15. Vorrichtung gemäß einem der Ansprüche 1 bis 14, dadurch gekennzeichnet, daß die Wellenachse leicht exzentrisch zur Behälterachse in der dem Produktsumpf gegenüberliegenden Behälterhälfte verläuft.

16. Vorrichtung gemäß einem der Ansprüche 1 bis 15, dadurch gekennzeichnet, daß die Behälterachse einen Winkel zur Horizontalen im Bereich von 0 bis 20 Grad bildet.

**Claims**

1. An equipment for treatment of substances of high viscosity, consisting of a heatable horizontal vessel having at one end an inlet (15) for a product and at the other end an outlet (6, 22) for the product, a heatable rotating hollow shaft (4) running in parallel with the axis of the vessel as a carrier for a number of heatable stirrer members (1) arranged in a row one behind the other in the axial direction of which the first stirrer member (5) at the inlet end and the last stirrer members (18, 19) at the outlet end have a shape deviating from the rest, and baffle members (3) and stripper members (2) fastened to the vessel, characterized in that
   a) each stirrer member (1) consists of one to four stirrer paddles, each having two hollow spokes (10, 11) and a hollow segment (12) of a ring connecting the latter peripherally and having a product-dragging-strip (8) mounted at the trailing end, and is capable of being heated by means of a liquid heat-carrier medium which may be led in and out via the shaft (4) and circulates through the hollow spokes (10, 11) and the connecting hollow ring segments (12),
   b) in the lower region of the vessel in the free space which in the direction of rotation lies before the product sump and between every two stirrer members (1) in succession except for the last two (18, 19) at the outlet end, there is a framelike stripper member (2) adjacent to said stirrer members, the frame having two cranked sides spread in the circumferential direction and inclined with respect to the radial reference direction against the direction of rotation as well as a cross-connection at the shaft (4), and
   c) in the upper region of the vessel in the end region of the sump which is drawn up in the direction of rotation and between every two stirrer members (1) emerging side by side with the exception of the last two (18, 19) at the outlet end, a baffle member (3) which with respect to the radial reference direction is angularly offset against the direction of rotation and in the axial view is widened near the wall and in sideview is thickened near the shaft, with a blunt leading edge and an elongated trailing edge, is brought up to the shaft (4).

2. An equipment in accordance with Claim 1, characterized in that the distances of the stirrer members (1) apart as well as the mutual spacings of the baffle members (3) and stripper members (2) increase or are constant from the product inlet end to the outlet end.

3. An equipment in accordance with one of the Claims 1 to 2, characterized in that at option the radial width of the hollow ring segment connections (12) decreases or is constant from the product inlet end to the outlet end.

4. An equipment in accordance with one of the Claims 1 to 3, characterized in that referred to the axis of the shaft the ring segment connections (12) are arranged concentrically or spirally with a clearance to the vessel wall of less than 10 % of the vessel diameter.

5. An equipment in accordance with one of the Claims 1 to 4, characterized in that the baffle members (3) and stripper members (2) succeeding one another axially are arranged on the vessel wall along helical lines and the succeeding stirrer paddles are arranged in line in the axial direction.

6. An equipment in accordance with one of the Claims 1 to 4, characterized in that the baffle members (3) and stripper members (2) succeeding one another axially are arranged in line along the vessel wall and the succeeding stirrer paddles are arranged angularly offset in the axial direction.

7. An equipment in accordance with one of the Claims 1 to 6, characterized in that each stirrer member (1) consists of two stirrer paddles of which the spokes (10, 11) form an angle in the range from 50 to 100 degrees, the stirrer paddles being offset from one member to the next by from 0 to 50 % of this angle.

8. An equipment in accordance with Claim 7, characterized in that the spokes (10, 11) form an angle of about 75 degrees and the stirrer paddles of stirrer members succeeding one another axially are offset by from 0 to 5 % of this angle.

9. An equipment in accordance with one of the Claims 1 to 6, characterized in that each stirrer member (1) consists of three stirrer paddles of which the spokes (10, 11) form an angle in the range from 40 to 80 degrees, the stirrer paddles being offset from one member to the next by from 0 to 25 % of this angle.

10. An equipment in accordance with Claim 9, characterized in that the spokes (10, 11) form an angle in the range from 50 to 60 degrees and the stirrer paddles are offset by from 0 to 2.5 % of this angle.

11. An equipment in accordance with Claim 9 or 10, characterized in that the stirrer paddles are offset by 0 % and the baffle members (3) and stripper members (2) succeeding one another axially are arranged on the vessel wall offset by a radial angle in the range from 0.5 to 5 degrees.

12. An equipment in accordance with one of the Claims 1 to 11, characterized in that the last stirrer member (19) at the outlet end consists of at least one compact heatable sicklelike stirrer arm curved backwards in the direction of rotation and having a trailing product-dragging-strip (20) set towards the rear wall and a product-dragging-strip (8) mounted trailing at the periphery.

13. An equipment in accordance with one of the Claims 1 to 12, characterized in that the peripheral product-dragging-strips (8) which sweep the cylindrical wall and have a cross-section like a carrying wing and next the wall a trailing edge (25) with a smooth, comblike or wavelike profile, form scoop spaces (24) which are open in the direction of rotation and at both sides and taper in against the direction of rotation.

14. An equipment in accordance with one of the Claims 1 to 13, characterized in that the outlet for the product is raised in the direction of rotation to a range of angle of from 20 to 80 degrees past the bottom line of the vessel and that on the wall directly beyond this opening in the direction of rotation a framelike stator member with an additional middle web (21) or a grid structure (16) is fitted between the two last stirrer members (18 and 19) at the outlet end.

15. An equipment in accordance with one of the Claims 1 to 14, characterized in that the axis of the shaft runs slightly offcentre from the vessel axis in the half of the vessel lying opposite the product sump.

16. An equipment in accordance with one of the Claims 1 to 15, characterized in that the vessel axis makes an angle to the horizontal in the range from 0 to 20 degrees.

**Revendications**

1. Dispositif de traitement de substances très visqueuses, comportant un récipient horizontal chauffable muni d'une entrée de produit (15) sur un côté et d'une sortie de produit (6, 22) sur l'autre côté, d'un arbre creux (4) rotatif, à chauffage réglable, parallèle à l'axe du récipient et portant plusieurs éléments agitateurs (1) à chauffage réglable, se succédant dans la direction axiale, parmi lesquels le premier élément agitateur (5) du côté entrée et les derniers éléments agitateurs (18, 19) du côté sortie présentent une forme différente de celle des autres, et des éléments de retenue (3) et des éléments racleurs (2) fixés du côté du récipient, caractérisé en ce que

a) chaque élément agitateur (1) est composé d'une à quatre ailettes possédant chacune deux rayons creux (10, 11) et un segment annulaire (12) creux, formant un raccord périphérique, présentant une barre d'entraînement du produit (8) placée en déphasage retard et est chauffé de façon réglable au moyen d'un milieu caloporteur liquide susceptible d'être amené et retiré par l'arbre (4) et circulant dans les rayons creux (10, 11) et les raccords creux formant des segments annulaires (12),

b) un élément racleur (2) marginal de type cadre, présentant deux montants de cadre coudés, écartés dans la direction circonférencielle et inclinés par rapport à la direction de référencè radiale dans le sens contraire à la rotation ainsi qu'un raccord transversal au niveau de l'arbre (4) est présent dans la partie inférieure du récipient dans chaque espace libre se trouvant avant la masse du produit dans le sens de la rotation, entre respectivement deux éléments agitateurs successifs (1), à l'exception des deux derniers (18, 19) du côté sortie, et

c) un élément de retenue (3) décalé angulairement par rapport à la direction de référence radiale dans le sens contraire à la rotation, élargi en vue axiale à proximité de la paroi et épaissi en vue latérale à proximité de l'arbre, possédant une face sans tranchant recevant l' impact et une face arrière allongée s'étend jusqu'à l'arbre (4) dans la partie supérieure du récipient dans chaque zone terminale de la masse du produit remontée dans le sens de la rotation entre respectivement deux éléments agitateurs (1) émergeant côte à côte, à l'exception des deux derniers (18, 19) du côté sortie.

2. Dispositif selon la revendication 1, caractérisé en ce que les distances entre les éléments agitateurs entre eux et les distances réciproques entre les éléments de retenue (3) et les éléments racleurs (2) s'accroissent ou sont constantes du côté entrée de produit au côté sortie.

3. Dispositif selon une des revendications 1 ou 2, caractérisé en ce que la largeur radiale des raccords creux en forme de segments annulaires (12) décroît ou est constante, au choix, du côté entrée de produit au côté sortie.

4. Dispositif selon une des revendications 1 à 3, caractérisé en ce que les raccords en forme de segments annulaires (12) sont disposés de façon concentrique ou en spirale par rapport à l'axe de l'arbre, à une distance de la paroi du récipient inférieure à 10 % du diamètre du récipient.

5. Dispositif selon une des revendication 1 à 4, caractérisé en ce que les éléments de retenue et les éléments racleurs (3 et 2) se succédant axialement sont disposés sur la paroi du récipient, le long de lignes hélicoïdales et que les éléments agitateurs successifs sont alignés dans la direction axiale.

6. Dispositif selon une des revendications 1 à 4, caractérisé en ce que les éléments de retenue et les éléments racleurs (3 et 2) se succédant axialement sont alignés le long de la paroi du récipient et que les ailettes agitatrices se succédant sont décalées angulairement dans la direction axiale.

7. Dispositif selon une des revendications 1 à 6, caractérisé en ce que chaque élément agitateur (1) présente deux ailettes agitatrices dont les rayons (10, 11) forment un angle de 50 à 100°, les ailettes agitatrices étant décalées de 0 à 50 % de cet angle d'un élément à l'autre.

8. Dispositif selon la revendication 7, caractérisé en ce que les rayons (10, 11) forment un angle d'environ 75° et que les ailettes agitatrices d'éléments agitateurs se succédant axialement sont décalées de 0 à 5 % de cet angle.

9. Dispositif selon une des revendications 1 à 6, caractérisé en ce que chaque élément agitateur (1) présente trois ailettes agitatrices dont les rayons (10, 11) forment un angle de l'ordre de 40 à 80°, les ailettes agitatrices étant décalées de 0 à 25 % de cet angle d'un élément à l'autre.

10. Dispositif selon la revendication 9, caractérisé en ce que les rayons (10, 11) forment un angle de l'ordre de 50 à 60° et que les ailettes agitatrices sont décalées de 0 à 2,5 % de cet angle.

11. Dispositif selon la revendication 9 ou 10, caractérisé en ce que les ailettes agitatrices sont décalées de 0 % et en ce que les éléments de retenue et les éléments racleurs (3 et 2) se succédant axialement sont décalés d'un angle radial de l'ordre de 0,5 à 5° sur la paroi du récipient.

12. Dispositif selon une des revendications 1 à 11, caractérisé en ce que le dernier élément agitateur (19) côté sortie se compose d'au moins un bras agitateur compact, chauffable, recourbé vers l'arrière en forme de croissant dans le sens de la rotation, chaque bras étant muni d'une barre d'entraînement du produit en position arrière (20) du côté de la paroi arrière et d'une barre d'entraînement du produit (8) placée en déphasage retard à la périphérie.

13. Dispositif selon une des revendications 1 à 12, caractérisé en ce que les barres d'entraînement du produit (8) périphériques, frôlant la paroi cylindrique, ayant une section transversale semblable à celle d'une aile porteuse et une arête de poursuite (25) du côté paroi à profil lisse, en forme de crête ou d'onde, forment des chambres de puisement (24) ouvertes dans le sens de la rotation et bilatéralement, se rétrécissant dans le sens contraire à la rotation.

14. Dispositif selon une des revendications 1 à 13, caractérisé en ce que la sortie produit est surélevée dans le sens de la rotation après la ligne de fond du récipient dans une plage angulaire de 20 à 80° et qu'un élément stator en forme de cadre à entretoise centrale additionnelle (21) ou à structure de grille (16) est disposé dans le sens de la rotation directement après cet orifice entre les deux derniers éléments agitateurs (18 et 19) du côté sortie, du côté paroi.

15. Dispositif selon une des revendications 1 à 14, caractérisé en ce que l'axe de l'arbre est légèrement excentrique par rapport à l'axe du récipient dans la moitié du récipient opposée à la masse du produit.

16. Dispositif selon une des revendications 1 à 15, caractérisé en ce que l'axe du récipient forme un angle de l'ordre de 0 à 20° avec l'horizontale.

Fig. 1

Fig.2.

Fig. 3.

EP 0 320 586 B1

Schnitt A - B

Schnitt C - D

Fig. 4.

Fig. 5

Fig. 6.